# EUROPEAN PATENT APPLICATION

(11) **EP 1 980 424 A2**
(43) Date of publication of application: **15.10.2008**
(21) Application number: 08154494.2
(22) Date of filing: 14.04.2008
(51) Int. Cl.: B60G 7/00

(54) **Vehicle suspension system**

(30) Priority: 13.04.2007 GB 0707075
(71) Applicant: Walsh, Edward, Little Bentley Colchester Essex CO7 8SE (GB)
(72) Inventor: Walsh, Edward, Little Bentley Colchester Essex CO7 8SE (GB)
(74) Representative: Sanderson, James L.C.

(57) **Abstract**

A vehicle suspension system including two suspension components (12,18,20,80,82) articulated together by a joint (19,83) which comprises a connecting member (24,87,108) and a socket member (22,84,101). The connecting member has an outer surface (28) of circular cross-section and a mounting pin (14,86,110), and the socket member (22,84,101) defines a socket (23,88,109) in which the outer surface (28) of the connecting member is a close running fit. The connecting member is mounted on one of the suspension components by said pin (14,86,110) and the socket member (22,84,101) is provided on the other of the suspension components. In one arrangement the mounting pin (14,86) may extend eccentrically to the outer surface (28) of the connecting member (24,87) and said connecting member may be adapted for rotational adjustment about the mounting axis of the pin. In another arrangement the socket member (101) may be mounted for rotational adjustment about an axis substantially parallel to but offset from the axis of the outer surface of the connecting member (108). Both variations permit dynamic adjustment of the camber angle of a wheel coupled to the suspension system.

## Description

This invention relates to a vehicle suspension system and in particular to a suspension system adapted to permit adjustment of the camber angle of a wheel of the vehicle.

A primary purpose of a vehicle suspension system is to assist in the handling of the vehicle under conditions such as turning, accelerating and braking and also reduce the effect on passengers of road noise, vibrations and uneven terrain on which the vehicle might be travelling. The present invention is concerned with the handing of the vehicle, particularly when turning.

Under all driving conditions, and especially turning, braking and accelerating, optimum performance is achieved when the whole width of a tyre is in contact with the ground so as to provide maximum grip. For example, when accelerating, the torque generated by the engine and transmitted to the driving wheels is most effective when the whole width of each tyre makes contact with the ground so that greater traction is achieved. Similarly for braking, the vehicle will have greater deceleration when the whole width of each tyre makes contact with the ground since there is more tread to create greater friction.

When a vehicle turns it experiences body roll whereby the vehicle leans away from the corner due to the centripetal force, which in turn causes a greater proportion of the vehicle's weight to transfer to the outside wheels and thereby causing unloading of the inside wheels. Were a vehicle to have no suspension system, the angle of each road wheel would remain fixed with respect to the chassis, under all driving conditions. As such, when that vehicle having no suspension system corners at high speed, the centripetal force would cause the inside wheels of that vehicle to lift.

The suspension system on most modern vehicles serves dynamically to adjust the camber angle (the angle between the plane of the wheel and a vertical plane, which is discussed below in more detail), of the wheels during different driving conditions, primarily by way of converging unequal length suspension arms.

Converging unequal length wishbone suspension arms serve dynamically to adjust the camber of the wheel so that when the vehicle turns the plane of the wheel tends to remain substantially perpendicular to the surface of the road. This system comprises upper and lower suspension arms each having one end coupled to the chassis and the other end coupled to the wheel hub. One of the upper and lower suspension arms is coupled to a spring and damper arrangement fixed to the chassis and arranged to control movement of the suspension system. The wishbones are arranged to converge with one another and generally the upper wishbone is shorter than the lower wishbone. This arrangement causes the angle of the wheel hub (and so the camber angle of the wheel) to change in response to a change in vertical movement of the wheel hub produced by loading and unloading of the suspension system. As such, as the vehicle turns, a proportion of its weight will transfer from the inside wheels to the outside wheels, and the camber angle of the wheels will adjust accordingly.

When a vehicle brakes and accelerates, it will experience dive and squat, respectively. Dive refers to the weight of the vehicle being transferred to the front suspension system thereby causing the vehicle's nose to fall. Conversely, squat refers to the redistribution of weight to the rear suspension system, which causes the nose of the vehicle to rise. As described above, during braking and acceleration the plane of the wheel should be perpendicular to the road surface so that the whole width of the tyre makes contact with the ground. A converging wishbone suspension system is ideally set up so that when the vehicle is travelling in a straight line the wheels are perpendicular to the road to reduce wear, but when the vehicle turns the loading on the outside wheels is increased and the resultant vertical movement changes the camber angle of the wheels. Ideally, the tyres should remain perpendicular to the road when braking and accelerating in a straight line, so as to maximise the contact area, but when the vehicle experiences dive or squat, the camber angle of the wheels will change, thereby reducing the contact area of the tyre with the ground. Since double wishbone suspension systems effect a change in camber angle when braking and accelerating, due to the consequences of squat and dive, it cannot be considered an ideal solution to the problem of dynamically adjusting the camber angle.

An alternative arrangement for dynamically adjusting the camber angle of wheels when the vehicle is turning is by configuring the suspension system so that it has positive castor. Castor angle is discussed later in this document but basically it refers to the angle of the steering axis. If a steered wheel is being turned about an axis inclined to the vertical, the wheel will gain camber when turned. This arrangement allows the camber to be adjusted solely when the vehicle turns and not when it brakes or accelerates in a straight line.

There are two major disadvantages with this arrangement; the first is that castor applies only to the steered wheels of a vehicle, and therefore it does not permit the camber of the rear wheels to be adjusted. Secondly, a suspension system configured with positive castor requires greater effort to steer the vehicle. This is consistent with the primary use of castor, which is to improve the straight-line stability of a vehicle.

It is a principal aim of the present invention to overcome the above problems associated with known suspension systems arranged for effecting dynamic adjustment of the camber angle of a vehicle's wheels.

According to the invention, there is provided a vehicle suspension system including two suspension components articulated together by a joint which comprises a connecting member and a socket member, the connecting member having an outer surface of circular cross-section and a mounting pin, and the socket member defining a socket in which the outer surface of the connecting member is a close running fit, the connecting member being mounted on one of the suspension components by said pin and the socket member being provided on the other of the suspension components, and **either** the mounting pin extends eccentrically to the outer surface of the connecting member and said connecting member is adapted for rotational adjustment about the mounting axis of the pin or the socket member is mounted for rotational adjustment about an axis substantially parallel to but offset from the axis of the outer surface of the connecting member.

The following description relates to an aspect of the invention in which the mounting pin extends eccentrically to the outer surface of the connecting member. It will be appreciated that due to the connecting member being received in a socket and mounted on one of the two suspension components and arranged for rotational adjustment about the axis of the eccentric mounting pin, as said connecting member is rotated there will be relative translational movement between the two suspension components. This translational movement between the two suspension components may cause a change in camber angle of a wheel connected to a wheel strut, so long as the eccentricity of the mounting pin is correctly aligned during installation.

The mounting pin is fixed rigidly to the connecting member, such that rotational movement of said mounting pin about its longitudinal axis causes relative movement between the connecting member and the socket member in a direction transverse to the longitudinal axis of the pin.

In one embodiment of the invention, there is provided a suspension system arranged for a steered wheel of a vehicle, which normally will be a front wheel, though it should be understood that this embodiment of the invention is compatible with a rear wheel of a vehicle, provided it is steered. The two suspension components comprise a suspension arm and a kingpin arranged for rotatably supporting a front wheel of the vehicle. The kingpin has a steering arm linked to a steering mechanism, whereby operation of the steering mechanism moves the steering arm to turn the kingpin relative to the suspension arm, so adjusting the joint.

Furthermore, in a preferred arrangement, the connecting member is secured to the kingpin whereby operating the steering mechanism causes the kingpin to turn, thereby effecting transverse movement of the mounting pin. Depending on the alignment of the mounting pin and connecting member relative to the socket, this transverse movement will result in the camber of a supported front wheel to be adjusted.

In an alternative arrangement, the socket member is provided on the kingpin and the mounting pin is secured to the suspension arm. This arrangement enables the static adjustment of the angular position of the connecting member about the longitudinal axis of the mounting pin, which adjusts the camber of a supported front wheel.

In a second embodiment of the invention, the vehicle suspension system is arranged for a rear wheel of the vehicle having no steering mechanism associated therewith. In this embodiment the two suspension components comprise a suspension arm and a wheel strut. The mounting pin of the connecting member is rotatably supported on one of the suspension arm and the strut and an actuator is arranged to effect rotation of the mounting pin.

In a preferred arrangement of this second embodiment, the socket member is secured rigidly to the suspension arm and the mounting pin of the connecting member is rotatably supported on the strut. Operation of the actuator rotates the connecting member to cause relative movement between the strut and the suspension arm in a direction transverse to the longitudinal axis of the mounting pin.

In yet another arrangement, the socket member is fixed rigidly to the strut and the mounting pin of the connecting member is rotatably supported on the suspension arm. Operation of the actuator causes the connecting member to rotate about the longitudinal axis of the mounting pin so adjusting the position of the strut relative to the suspension arm in a direction transverse to the longitudinal axis of the mounting pin.

In a third embodiment of the invention the vehicle suspension is suitable for any wheel of the vehicle. The two components comprise a suspension arm and a chassis part. The mounting pin of the connecting member is rotatably supported on one of the suspension arm and the chassis part and an actuator is arranged to effect rotation of the mounting pin.

In a preferred arrangement of this third embodiment the socket member is secured rigidly to the chassis part and the mounting pin of the connecting member is rotatably supported on the suspension arm. Operation of the actuator rotates the connecting member to cause relative movement between the chassis part and the suspension arm in a direction transverse to the longitudinal axis of the mounting pin.

In yet another arrangement the socket member is fixed rigidly to the suspension arm and the mounting pin of the connecting member is rotatably supported on the chassis part. Operation of the actuator causes the connecting member to rotate about the longitudinal axis of the mounting pin and so adjusting the position of the suspension arm relative to the chassis part in a direction transverse to the longitudinal axis of the mounting pin.

The following description relates to an aspect of the invention, in which the socket member is mounted for rotational adjustment about an axis substantially parallel to but offset from the axis of the outer surface of the connecting member.

Preferably, the socket member is mounted in a housing provided on one of the suspension components. The socket member may have a circular external profile, the housing being correspondingly formed to turn with respect to the socket member.

In one embodiment of the second aspect of this invention, the suspension components comprise a wheel strut and a suspension arm. The mounting pin of the connecting member is secured to one of the wheel strut and suspension arm and the socket member is rotatably supported on the other of the wheel strut and suspension arm. Static adjustment of the angular position of the socket member about its axis of rotation adjusts the camber of a wheel mounted on the wheel strut.

Furthermore, in a preferred embodiment the socket member is rotatably supported on one of the wheel strut and the suspension arm, and an actuator is arranged to effect rotation of said socket member.

In one arrangement, the mounting pin of the connecting member is provided on the suspension arm and the socket member is rotatably supported on the wheel strut. Operation of the actuator rotates the socket member to cause relative movement between the wheel strut and the suspension arm in a direction transverse to the rotational axis of the socket member.

In yet another arrangement the mounting pin of the connecting member is provided on the wheel strut and the socket member is rotatably supported on the suspension arm. Operation of the actuator causes the socket member to rotate about its rotational axis and so adjusting the position of the wheel strut relative to the suspension arm in a direction transverse to the rotational axis of the socket member.

In a second embodiment of the invention, the suspension components comprise a suspension arm and a chassis part. The mounting pin of the connecting member is secured to one of the suspension arm and the chassis part and the socket member is rotatably supported on the other of the suspension arm and the chassis part. Static adjustment of the angular position of the socket member about its axis of rotation adjusts the camber of a wheel mounted on the wheel strut.

Preferably the socket member is rotatably supported on one of the suspension arm and the chassis part, and an actuator is arranged to effect rotation of said socket member.

In a preferred arrangement, the mounting pin of the connecting member is provided on the suspension arm and the socket member is rotatably supported on the chassis part. Operation of the actuator rotates the socket member to cause relative movement between the suspension arm and the chassis part in a direction transverse to the rotational axis of the socket member.

In yet another arrangement, the mounting pin of the connecting member is supported on the chassis part and the socket member is rotatably supported on the suspension arm. Operation of the actuator causes the socket member to rotate about its rotational axis and so adjusts the position of the suspension arm relative to the chassis part in a direction transverse to the rotational axis of the socket member.

The actuator may comprise a hydraulic ram driven by a hydraulic pump or a pneumatic ram driven by compressed air. Alternatively, the actuator could be an electro-mechanical device such as a solenoid or a geared motor of sufficient power to effect rotation of the mounting pin. Sensors may be provided on the steering mechanism and suspension system to monitor the steering setting and perhaps the loading of the vehicle. The sensors transmit signals to a control unit arranged to control the actuator.

Preferably, the outer surface of the connecting member is part spherical and the socket is correspondingly formed for articulation about the outer surface of the connecting member. In this way, the articulated joint could comprise a rose joint wherein the ball member is part-spherical, but having opposed planar faces. Alternatively, the articulated joint may comprise a true ball joint, wherein the ball member is substantially spherical.

In an alternative arrangement the outer surface of the connecting member is generally cylindrical and the socket is correspondingly formed for rotation with respect to the connecting member.

A spherical connecting member permits a greater range of movement than a cylindrical connecting member. For instance, in the case of a suspension system for a steered wheel of a vehicle, it may be advantageous to use an eccentric articulated joint having a spherical connecting member to connect the kingpin to the suspension arm. Whereas, in the case of a suspension system for a non-steered wheel it may be preferable to use an eccentric articulated joint having a cylindrical connecting member to connect the wheel strut to the suspension arm, since a lesser degree of movement is required.

The connecting member can also be orientated so as to enable the castor angle to be adjusted as well as the camber angle. For example, by orientating the eccentric articulated joint so that the mounting pin of the connecting member is substantially horizontal and parallel to the length of the vehicle there is no castor adjustment on rotation of said mounting pin. Conversely, if the eccentric articulated joint is arranged so that the mounting pin extends substantially vertically, rotation of the connecting member produces translational movement of the mounting pin in a line traverse and parallel to the length of the vehicle, thereby adjusting the camber and castor.

Index marks may be provided on the connecting member and on the opening of the socket member to assist the setting up of the suspension system. Similarly, index marks could be provided on the socket member and around the opening of the housing so as to assist the setting up of the suspension system. Preferably, the vehicle's suspension system is setup so that each wheel experiences the same change in camber in response to relative movement between each connecting member and socket member or socket member and housing.

The suspension system includes upper and lower suspension arms, one of which arms is connected to the wheel strut or chassis by said eccentric articulated joint. The other suspension arm may be connected to the kingpin by conventional means such as a concentric ball joint or rose joint. However, in a preferred embodiment there is provided a second articulated eccentric joint, essentially the same as that described above, which connects the other of said upper and lower suspension arms to the wheel strut or chassis part. Preferably, the suspension arm comprises a wishbone having two arms connected to the chassis part by eccentric articulated joints.

Preferably, the vehicle suspension system is setup so that the connecting member connecting the upper suspension arm to the wheel strut or chassis is asymmetrically disposed relative to the connecting member connecting the lower suspension arm to the wheel strut or chassis part. For a maximum change in camber angle on operating the steering mechanism away from a central reference setting, the articulated joints may be arranged so that the mounting axes of the mounting pins are located on substantially diametrically opposite sides of their respective sockets. This will result in an additive change in camber angle.

Alternatively, for no change in camber angle on operating the steering mechanism away from a central reference setting, the articulated joints should be set up so that the connecting member connecting the upper suspension arm to the wheel strut or chassis part is symmetrically disposed relative to the connecting member connecting the lower suspension arm to the wheel strut or chassis part.

The preferred method of dynamically adjusting the camber angle of a steered wheel supported by the front suspension of a vehicle comprises the steps of: providing a suspension system as described above; and adjusting the steering mechanism so that the kingpin and connecting member are caused to turn relative to the suspension arm, the eccentricity of the mounting pin with respect to the connecting member causing a change in the angle of the kingpin axis with respect to the vertical, whereby there is a change in the wheel camber.

A method of dynamically adjusting the camber angle of a wheel supported by a suspension system and comprising the steps of providing a suspension system as described above; and sensing movement of the steering mechanism or loading of the vehicle and sending a signal from the sensor to a control circuit, the control circuit then causing the actuator to rotate one of the connecting member and socket member relative to the suspension components, so that a translational movement occurs between the two suspension components which adjusts the angle of the wheel strut relative to a vertical axis, so adjusting the camber of the wheel.

By way of example only, two embodiments of the vehicle suspension system arranged in accordance with the present invention and certain modifications thereof will now be described in detail, reference being made to the accompanying drawings, in which:
Figure 1 is an illustration of the first embodiment of this invention incorporated as a part of a suspension system for the front wheel of a vehicle and arranged for dynamic adjustment of the camber angle of the wheel as the steering mechanism is operated;
Figure 2 is a cross-sectional view of an alternative arrangement of the first embodiment of this invention and which is also arranged for dynamic adjustment of the camber angle of the wheel;
Figure 3A is a schematic side view of part of a front suspension system showing the camber angle of the wheel when the steering is set to full lock in one direction;
Figure 3B is a schematic plan view of the arrangement shown in Figure 3A;
Figure 4A is a schematic side view of the arrangement shown in Figure 3A, showing the camber angle of the wheel when the steering is set to full lock in the other direction;
Figure 4B is a schematic plan view of the arrangement shown in Figure 4A;
Figure 5 is an illustration of an alternative arrangement of the invention intended to be incorporated as a part of a rear suspension system of a vehicle and arranged for dynamic adjustment of the camber angle;
Figure 6 is a schematic side view of part of the arrangement shown in Figure 5;
Figure 7 is an illustration of an alternative arrangement of the invention;
Figure 8 is an illustration of a further arrangement of the invention; and
Figure 9 is a schematic representation of another embodiment of the invention.

As hereinbefore described, there are several parameters associated with the wheels and suspension system of a vehicle, including the camber angle, castor angle and toe.

The camber angle is the angle at which the plane of the wheel lies relative to a vertical plane. The wheel is said to have negative camber if it leans in towards the chassis and positive camber if the wheel leans away from the chassis. Thus, if the highest point of the wheel is closer to the chassis than the lowest point of the wheel, the wheel is leaning towards the chassis and has negative camber. Most conventional passenger cars have four wheels, each having a wheel hub rotatably supported on a stub shaft extending laterally from a wheel strut. The camber angle of the wheel is equal to the angle of the stub shaft relative to a horizontal plane.

In the case of a wishbone front suspension system, the wheel strut is conventionally referred to as a kingpin and is rotatably supported at its upper and lower ends by upper and lower articulated joints so that it may pivot about a generally vertical axis, known as the steering pivot axis. The castor angle is defined as the angle at which the steering pivot axis intersects a vertical line extending through the rotational axis of the wheel. In the event that the steering pivot axis is co-incident with the vertical line, the castor angle is said to be zero. If the intersection of that vertical axis with the ground is behind the point at which the steering axis intersects the ground, the castor angle is said to be positive. Conversely, if the intersection of that vertical axis with the ground is in front of the point at which the steering axis intersects the ground, the castor angle is said to be negative.

The toe angle describes the angle of the front wheels relative to a horizontal axis extending along the length of the car, when the steering is centred. For example, if the most forward points on the inside edges of the wheels are closer together than the most rearward points on the inside edges of the wheels, then the pair of wheels have toe-in. Conversely, if the most rearward points on the inside edges of the wheels are closer than the most forward points, then the pair of wheels have toe-out.

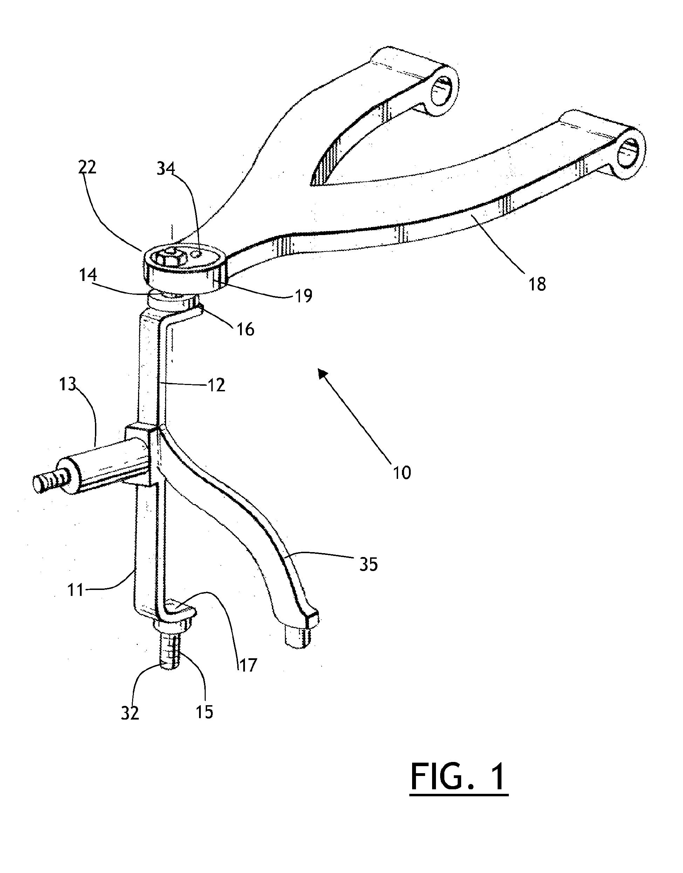

Referring to Figures 1 to 3, there is shown part of a vehicle front suspension system generally indicated 10 and which is arranged for the front wheels of a rear wheel drive vehicle, though it should be understood that this embodiment of the invention is not limited to rear wheel drive vehicles. The suspension system 10 is configured to cause dynamic adjustment of the camber angle of the front wheels concurrently with and consequent upon adjustment of the steering angle of those wheels. On each side of the vehicle there is provided a wheel strut in the form of a kingpin 12 which has a stub shaft 13 extending outwardly therefrom for rotatably supporting a front wheel (not shown) of the vehicle. The kingpin 12 has an upper mounting pin 14 and a lower mounting pin 15 extending generally vertically from a respective upper and lower end 16,17 thereof. The kingpin 12 is coupled to an upper wishbone 18 by an eccentric rose joint 19 and to a lower wishbone 20 by a concentric rose joint 21. The rose joints 19,21 each comprise a housing 22 having a part-spherical opening 23 in which is located a part spherical ball member 24,25. The ball members 24,25 have opposed circular upper and lower planar faces 26,27 and a part-spherical sidewall 28 which is a close running fit in the opening 23. Ball member 24 of the rose joint 19 has a bore 29 formed eccentrically therethrough and ball member 25 of the rose joint 21 has a bore 30 formed concentrically therethrough.

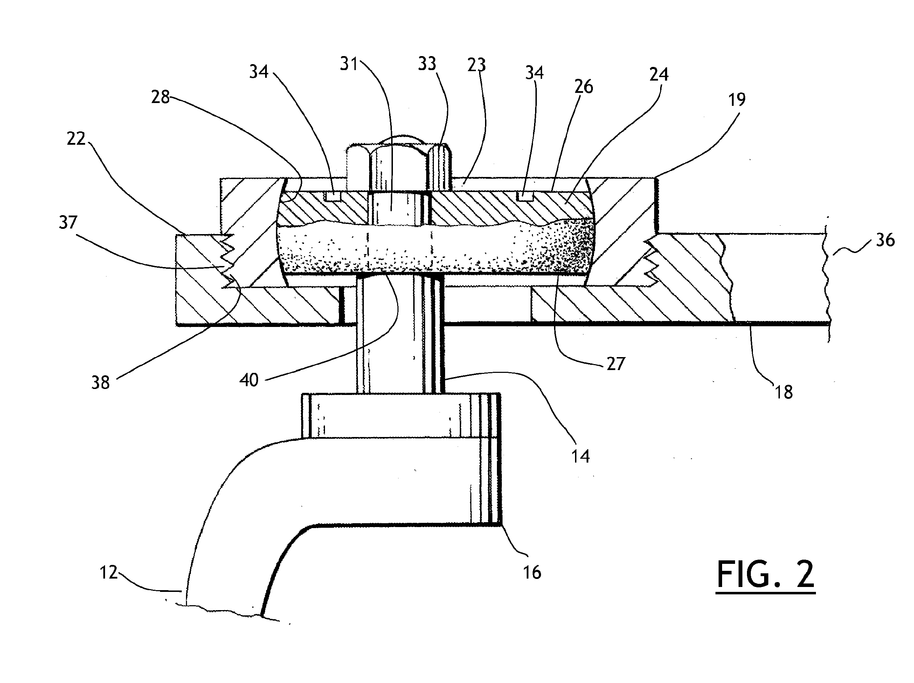

The housing 20 could be forged as an integral part of the wishbone 18 at the outer end thereof and then be subsequently machined, as shown in Figure 1. Alternatively, the housing may be formed separately from the wishbone and then secured thereto, for example by being provided with an external thread 37 which engages an internal thread 38 formed in a bore 39 extending partway through the outer end of the wishbone 18, as shown in Figure 2.

The upper mounting pin 14 has a smaller diameter end portion 31 which extends through bore 29 formed eccentrically in the ball member 24. A shoulder 40 is defined on the mounting pin 14 at the junction between the larger diameter part thereof and end portion 31, which shoulder 40 supports the lower face 27 of the ball member 22. Likewise, the lower mounting pin 15 has a smaller diameter end portion 32 which extends through bore 30 formed concentrically in the lower ball member 25, and is arranged in much the same way as the upper mounting pin 14. A respective nut 33 engages a thread formed on each end portion 31,32 and is tightened to secure the respective ball member 24,25 to the respective mounting pin 14,15 and hold the ball member against rotation.

A marker (not shown) is provided on an outer edge of the upper face 26 of the ball member 24 which marker points towards a series of index marks (not shown) on the housing and equally spaced at least part way around the periphery of the opening 23 to identify the angular position of the ball member 24 relative to the housing 22. The marker is located on the same radius as the axis of the mounting pin which arrangement is particularly useful when setting up the suspension system 10.

When tightening the nut 33, it will be necessary to restrain the upper ball member 24 from rotational movement relative to the mounting pin 14. for this purpose, two recesses 34 are formed in the upper face 26 for receiving two correspondingly sized pegs provided on a C spanner (not shown).

A steering arm 35 is rigidly connected to kingpin 12 and is linked to a steering mechanism (not shown) so that operation of the steering mechanism causes the kingpin to turn about the steering axis, the ball members 24,25 turning relative to the housing 22 during this adjustment of the steering angle of the front wheels.

The eccentricity of the bore 29 determines the maximum change in camber angle when moving the steering mechanism from full lock in one direction to full lock in the other direction. For example, a rose joint 19 having an eccentric bore 29 located near the periphery of the ball member 24 will create a greater change in camber than a rose joint having an eccentric bore located near the centre of the ball member. As such, if only a slight dynamic change in camber angle is required, the suspension system 10 could include an upper rose joint 19 having a ball member 24 in which the bore 29 is formed near the centre thereof.

Consideration will now be given to the setting-up of a suspension system having only one articulated eccentric joint, to achieve a maximum change in camber when the wheels are turned from full lock in one direction to full lock in the other direction. In this configuration the eccentric joint is set so that it does not contribute to the camber angle of the respective wheel when the wheel is in its dead ahead position. Instead, if the wheels are set at a negative or positive camber when in their dead ahead position, it is due to other factors, for example, unequal length wishbones. When the wheels are directed dead ahead so that the axis of the stub shaft 13 extends generally transverse to the length of the vehicle (provided there is no toe), the ball member 24 should be angled so that the radius on which the marker is positioned extends transverse to the axis of the stub shaft. When this configuration is achieved, the nut 33 should be tightened against the upper face 26 of the ball member 24, thereby preventing rotation of the ball member, relative to the mounting pin 14

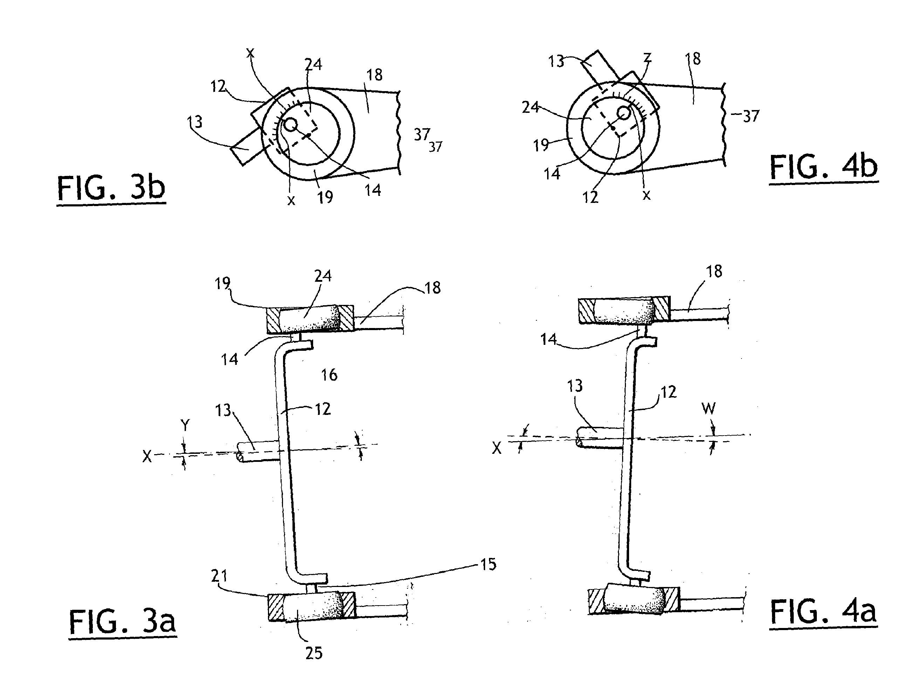

As the vehicle is steered the steering arm 35 causes the kingpin 12 and ball members 24,25 to rotate with respect to the housing, thereby adjusting the steering angle of the front wheels. Since the upper ball member 24 is mounted eccentrically on the mounting pin 14, the axis extending between the upper and lower mounting pins 14,15 is tilted relative to the vertical axis. Rotation of the kingpin 12 and ball members 24,25 relative to the housing 22 adjusts the angular position of the stub shaft relative to a horizontal datum line X. Figure 3B shows the position of the stub shaft 13 when the steering mechanism is at full lock in one direction and Figure 3A shows the resultant camber angle Y. Figure 4B shows the position of the stub shaft 13 when the steering mechanism is turned to full lock in the other direction and Figure 4A shows the resultant camber angle W.

When the steering angle of the front wheels is adjusted by turning the steering wheel, the camber angle of both front wheels will change. For example, the nearside wheel of a right hand-drive vehicle making a left turn will gain negative camber while the offside wheel will gain positive camber.

Rotation of the kingpin also has an inevitable effect on the castor angle of the wheel as well as the camber angle. As the ball member is rotated relative to the housing, the change in position of the upper mounting pin 14 will have two components: a component in a direction transverse to the length of the vehicle affecting the camber angle and also a component in a direction parallel to the length of the vehicle affecting the castor angle.

In a case where a greater change in camber angle is required, the concentric rose joint 21 connected to the lower wishbone 20 may be replaced with an eccentric ball joint. In this case, the eccentric ball members of the rose joints connecting the kingpin to the upper and lower wishbones should be arranged asymmetrically relative to one another, when the steering mechanism is at full lock. For example, at full lock the upper mounting pin 14 fixed to the ball member 24 of the upper rose joint 19 may be set to be closer to the chassis 37 than the lower mounting pin of the lower rose joint 21. When the steering mechanism is changed to full lock in the other direction, the angle of the kingpin changes so that the lower mounting pin fixed to the ball member 25 of the lower rose joint is closer to the chassis 37 than the upper mounting pin 14 of the upper rose joint 19.

In an alternative arrangement of the suspension system (not shown), the housing of the rose joint is provided on the upper end of the kingpin, and the mounting pin extends from the underside of the wishbone. In much the same way as described above, the mounting pin extends through a bore formed eccentrically in the ball member of the rose joint, and which is secured thereto by a nut. In this arrangement, dynamic rotation of the kingpin about the axis of the ball member will not adjust the camber of the wheel. However, it is possible statically to adjust the camber of the wheel by loosening the nut and rotating the ball member about the longitudinal axis of the mounting pin. By so doing, the position of the upper end of the kingpin will shift relative to the wishbone, thereby adjusting the camber angle of the wheel.

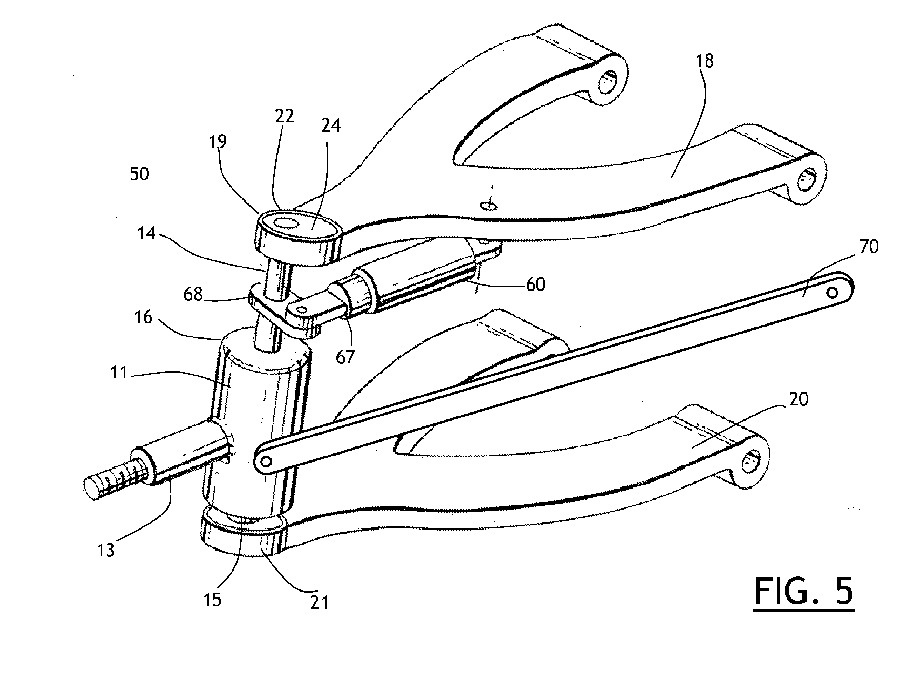

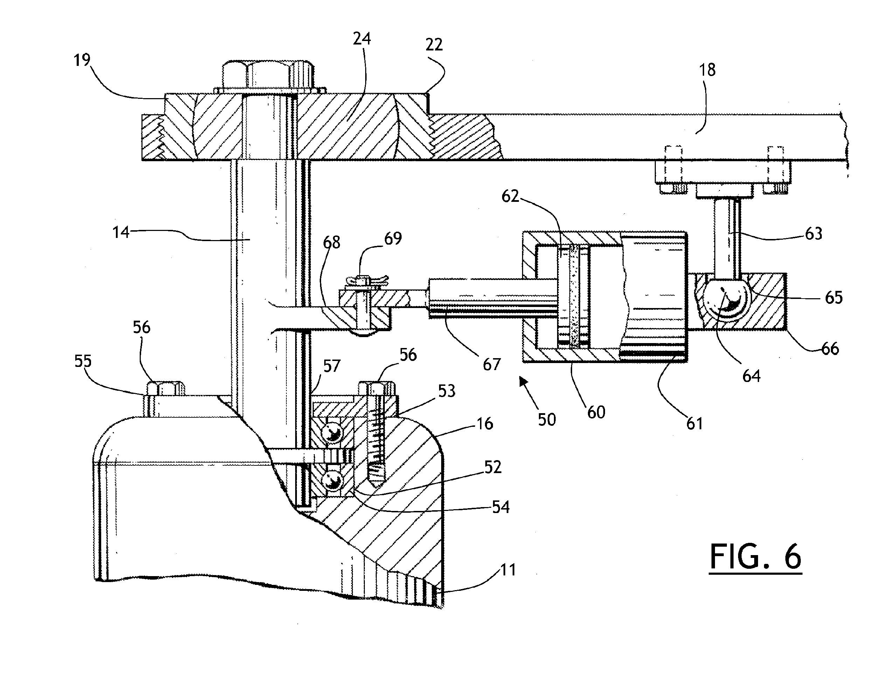

A further arrangement of the invention is shown in Figures 5 and 6, as comprising a double wishbone suspension system generally indicated 50 and arranged for the rear wheels (not shown) of a vehicle. It should be understood that though the drawings show a rear suspension system of a front wheel drive vehicle, this embodiment would work equally well with the suspension system of a rear wheel drive vehicle. The arrangement shown causes the camber angle of the rear wheels to be adjusted concurrently with the adjustment of the steering angle of the front wheels. The suspension system 50 comprises upper and lower wishbones 18,20 connected to a wheel strut 11 in the same manner as described previously; as such like parts are given like reference numbers. Since this arrangement is directed to part of a suspension system adapted for the rear wheels of a vehicle, the wheel strut is not connected to a steering mechanism. The mounting pin 14 is rotatably supported in a bearing assembly located in a cavity 52 formed in the upper end 16 of the wheel strut 11. The mounting pin 14 is provided with an annular flange 52 positioned between an upper and lower bearing race 53,54 seated in the cavity 52. The mounting pin 14 and bearing races 52,53 are restrained from axial movement by a cap 55 fastened to the upper end 16 of the wheel strut 11 by screws 56. The mounting pin 14 extends through an aperture 57 formed through the centre of the cap 55 and engages the ball member 24 of the upper rose joint 19 in the same manner as described above.

Since the wheel strut 11 is coupled to the upper and lower suspension arms 18, 20 by upper and lower articulated joints 19, 21 respectively, said wheel strut 11 is provided with a stay 70 which is connected to the chassis to prevent said wheel strut from turning. Though stay 70 is provided here to prevent rotation of the wheel strut, it should be understood that this is just one example of a suspension system for a non-steered wheel and having the eccentric articulated joint. For instance, rose joints 19,21 could be replaced with cylindrical joints comprising a cylindrical member housed in a correspondingly formed housing. The upper cylindrical joint could be eccentric such that a mounting pin extends eccentrically from the cylindrical member whereas the lower cylindrical joint could be concentric, similar to the arrangement shown in Figure 5. The cylindrical joints would be orientated such that the mounting pins are horizontally disposed so as to extend substantially parallel to the length of the vehicle and the upper mounting pin would include a radial arm 66 coupled to a ram rod 67 driven by a hydraulic ram 60.

A double acting hydraulic ram 60 is provided to effect rotation of the pin 14 relative to the wishbone 18. The ram 60 comprises a cylinder 61 having a piston 62 mounted for sliding movement therein, the ram 60 being operatively connected to a hydraulic pump (not shown). The cylinder 61 is supported by a rod 63 depending from the underside of the upper wishbone 18. The rod has a ball 64 on its free end which locates in a spherical socket 65 formed in a rear portion 66 of the ram, thereby allowing the hydraulic ram to pivot about a generally vertical axis. A ram-rod 67 extending axially from the piston 62 is coupled to an arm 68 extending radially from the mounting pin 14, the arm and ram rod being connected by a pin 69 permitting relative movement between the radial arm and ram rod about a vertical axis.

Sensors (not shown) are provided on the steering mechanism to sense when the vehicle is cornering and which sensors send electrical signals to a control circuit (not shown). An electrical signal is then sent from the control circuit, to at least one of a plurality of valves (not shown) operable to adjust the flow of fluid in and out of ports (not shown) provided at each end of the cylinder 61.

The lower mounting pin 15 is an integral part of the wheel strut 11 and connects to concentric rose joint 21 in the same manner as that described in the first embodiment. Alternatively, for a greater maximum change in camber angle on movement of the steering mechanism, an eccentric rose joint (not shown) could be used to connect the lower wishbone to the wheel strut. In this case, the wheel strut would require a cavity 52 in its upper and lower ends 16,17 rotatably to support both upper and lower mounting pins 14,15. Both mounting pins 14,15 would need independent hydraulic rams configured so that when one piston extends, the other retracts, and vice-versa. Alternatively, the upper and lower pins 14,15 could be coupled to a gearbox (not shown) driven by a hydraulic ram or alternative means.

In use, the sensors sense adjustment of the steering mechanism, and the sensor outputs are monitored by a control circuit which then sends a signal to one or more of the valves, causing them to open for a predetermined length of time. In so doing, high pressure fluid enters the cylinder through a port at one end thereof, which forces the piston 62 along the cylinder 61 causing fluid to flow out through a port at the other end of the cylinder 61. Axial movement of the piston 62 causes the radial arm 68 and mounting pin 14 to turn about the axis of the bearing races 52,53 and which also causes the hydraulic ram 60 to pivot about the axis of the rod 63. Rotation of the mounting pin 14 and ball member 24 relative to the housing causes translational movement in a direction transverse and parallel to the length of the vehicle, thereby effecting adjustment of the camber and castor angle.

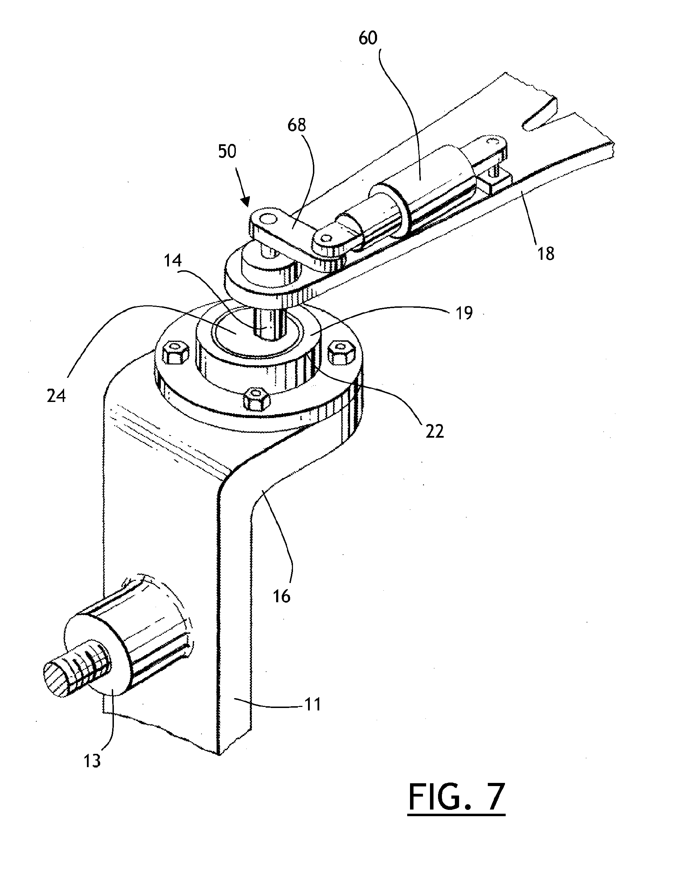

Referring now to Figure 7, there is shown an alternative arrangement in which the housing 22 of the eccentric rose joint 19 is mounted on the upper end 16 of the wheel strut 11 and the mounting pin 14 is rotatably supported on the upper wishbone 18 and extends therethrough. In this particular arrangement, the radial arm 68 and hydraulic ram 60 are located above the upper wishbone 18 and arranged to effect rotation of the ball member 24 relative to the wheel strut 11 in much the same way as described above.

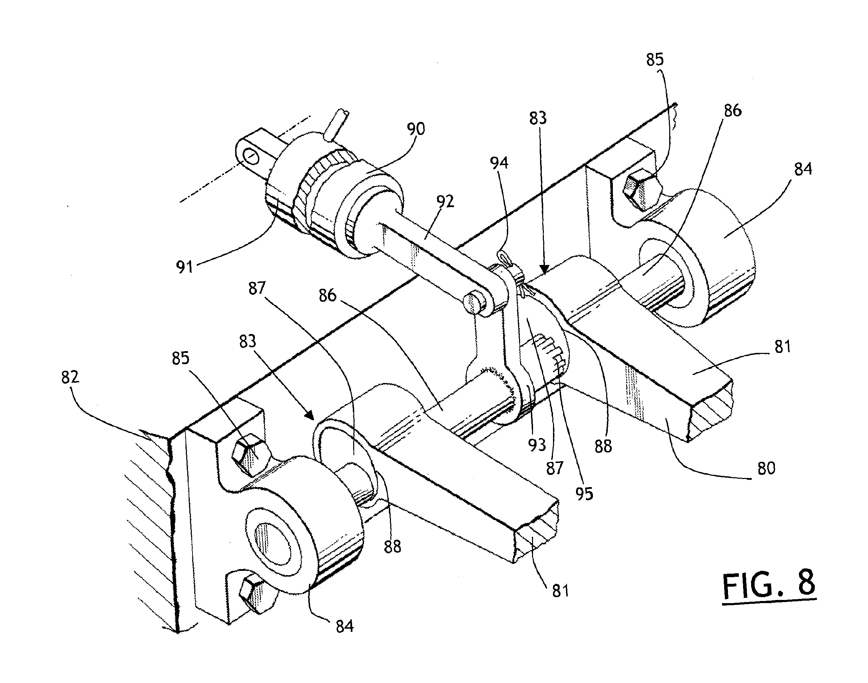

Figure 8 shows a third embodiment of the invention in which there is provided part of a wishbone suspension arm having two arms 81, mounted on part of a chassis 82 by eccentric cylindrical joints 83. A pair of bearing housings 84 are secured to the chassis 82 by bolts 85 and arranged to rotatably support a mounting pin 86. Mounting pin 86 carries a pair of eccentrically mounted cylindrical bushes 87 which are spaced axially apart along the length of said mounting pin 86. The mounting pin 86 extends through an opening formed eccentrically in each bush 87. Splines 88 are provided on the mounting pin which co-operate with splines formed inside the openings so as to prevent rotational movement of the bush 87 relative to the mounting pin 86. Each bush 87 is housed in a cylindrical socket 88 provided on an end portion 89 of each arm 81 and arranged so that a close running fit is formed so as to permit each bush 87 to rotate relative to its respective socket 88. Each bush 87 and socket 88 has an axis extending coaxially with the axis of the other bush and socket, and which extends parallel to, but offset from, the axis of the mounting pin 86. Each bush 87 is retained in its respective socket by two opposing end caps (not shown) provided on each arm and which partially cover the openings. The end caps are rings that cover the periphery of the openings and which may be welded or otherwise fastened to the arm. Alternatively or additionally the arm could be forged to include integral end caps.

In much the same way as described above, a double acting hydraulic ram 90 is provided to effect rotation of the mounting pin 86 relative to the suspension arm 80. The hydraulic ram 90 includes a piston (not shown) slidably located in a cylinder 91 which is connected to the chassis 82 by a ball joint (not shown) so that the hydraulic ram 90 is permitted to pivot about an axis parallel to that of the mounting pin 86. A ram rod 92 extending axially from the piston is coupled to an arm 93 extending radially from the mounting pin 86, the ram rod 92 and arm 93 being connected by a pin 94 extending therebetween so as to permit relative movement of the ram rod 92 and the arm 93 about an axis parallel to the mounting pin 86.

In operation, the hydraulic ram 90 is actuated in response to signals from sensors (not shown) on the steering system (not shown) to cause the piston to move axially along the cylinder 91. Expansion and contraction of the ram 90 causes the radial arm 93 and so mounting pin 86 to rotate about the bearing housings 84, the hydraulic ram 90 pivoting about an axis extending parallel to the mounting pin 86. Rotation of the mounting pin 86 and cylindrical bush 87 relative to the socket 88 causes translational movement of the suspension arm 81 in a direction transverse to the length of the vehicle, thereby adjusting the camber angle, but not the castor angle.

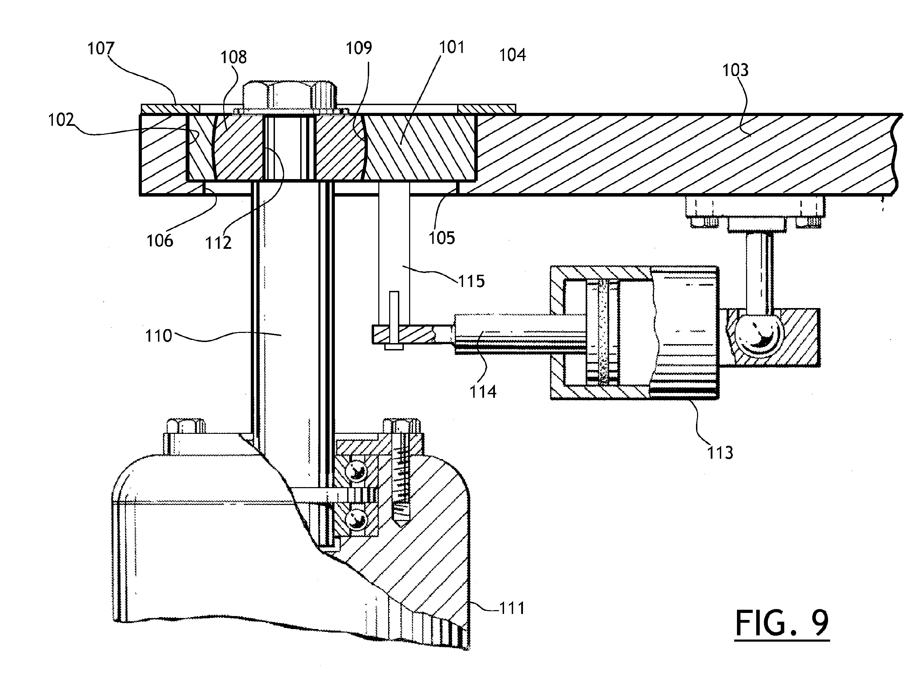

Figure 9 shows another embodiment of the invention in which there is provided a cylindrical bush 101 mounted in a cylindrical recess 102 formed in a suspension arm 103. The cylindrical recess 102 comprises an upper portion 104 in which the bush 101 is located and a lower portion 105 defined by an annular flange 106 extending inwardly from the underside of the suspension arm 103. The cylindrical bush 101 is seated on an upper surface of the annular flange 106 and forms a close running fit with the upper portion 104 of the cylindrical recess 102 for rotation therein. A ring 107 is mounted on the upper surface of the suspension arm 103 above the cylindrical recess so as to prevent axial movement of the cylindrical bush 101 relative to said suspension arm 103. The ring 107 can be welded or bolted to the suspension arm 103, or secured in place by any other suitable means.

A part spherical ball member 108 is mounted for rotation in a part spherical opening 109 formed in the cylindrical bush 101. The part spherical opening 109 has a geometrical axis offset from the geometrical axis of the cylindrical bush 101, such that the part spherical ball member 108 is eccentrically mounted inside the cylindrical bush 101. A mounting pin 110 connected to a wheel strut 111 extends through a bore 112 formed concentrically in the part spherical ball member 108 and which is secured to the part spherical ball member 108 in the same manner as described previously.

A hydraulic ram 113 is mounted to the underside of the suspension arm 103 and controlled by a control circuit (not shown) as described in previous embodiments. The hydraulic ram 113 drives a ram rod 114 which is coupled to a pin 115 extending from the underside of the cylindrical bush 101.

In use the hydraulic ram 113 is driven so as to effect movement of the ram rod, which in turn rotates the cylindrical bush 101 about its axis. Rotation of the cylindrical bush 101 causes translational movement of the mounting pin 110, since the axis of the mounting pin 110 and part-spherical ball member 108 is eccentric to the axis of the cylindrical bush 101. Translational movement of the mounting pin 110 adjusts the camber and castor angle of a wheel connected to the wheel strut 111. Rotation of the cylindrical bush 101 also causes the hydraulic ram 113 to pivot about an axis parallel to the axis of the cylindrical bush 101.

## Claims

1. A vehicle suspension system including two suspension components (12,18,20,80,82) articulated together by a joint (19,83) which comprises a connecting member (24,87,108) and a socket member (22,84,101), the connecting member having an outer surface (28) of circular cross-section and a mounting pin (14,86,110), and the socket member (22,84,101) defining a socket (23,88,109) in which the outer surface (28) of the connecting member is a close running fit, the connecting member being mounted on one of the suspension components by said pin (14,86,110) and the socket member (22,84,101) being provided on the other of the suspension components, and **either** the mounting pin (14,86) extends eccentrically to the outer surface (28) of the connecting member (24,87) and said connecting member is adapted for rotational adjustment about the mounting axis of the pin or the socket member (101) is mounted for rotational adjustment about an axis substantially parallel to but offset from the axis of the outer surface of the connecting member (108).

2. A vehicle suspension system as claimed in claim 1, wherein the mounting pin (14,86) extends eccentrically to the outer surface (28) of the connecting member (24,87) and said mounting pin is fixed rigidly to the connecting member, such that rotational movement of said mounting pin about its longitudinal axis causes relative movement between the connecting member and the socket member (22,84) in a direction transverse to the longitudinal axis of the pin.

3. A vehicle suspension system as claimed in claim 1 or claim 2, in which the mounting pin (14) extends eccentrically to the outer surface of the connecting member (24) and wherein said two suspension components comprise a suspension arm (18) and a kingpin (12) arranged for rotatably supporting a front wheel of the vehicle and which kingpin has a steering arm (35) linked to a steering mechanism, whereby operation of the steering mechanism moves the steering arm to turn the kingpin relative to the suspension arm, so adjusting the joint.

4. A vehicle suspension system as claimed in claim 1 or claim 2, wherein the mounting pin (14) extends eccentrically to the outer surface of the connecting member (24) and wherein the two suspension components comprise a suspension arm (18) and a wheel strut (11) and the mounting pin of the connecting member is rotatably supported on one of the suspension arm and the strut, and an actuator (60) is arranged to effect rotation of the mounting pin.

5. A vehicle suspension system as claimed in claim 1 or claim 2, wherein the mounting pin (86) extends eccentrically to the outer surface of the connecting member (87) and wherein the two components comprise a suspension arm (80) and a chassis part (82), the mounting pin of the connecting member is rotatably supported on one of the suspension arm and the chassis part, and an actuator (90) is arranged to effect rotation of the mounting pin.

6. A vehicle suspension system as claimed in claim 1, in which the socket member (101) is mounted for rotational adjustment about an axis substantially parallel to but offset from the axis of the outer surface of the connecting member (108) and wherein the socket member is mounted in a housing (102) provided on one of the suspension components, the socket member having a circular external profile and the housing being correspondingly formed to turn with respect to the socket member.

7. A vehicle suspension system as claimed in claim 1 or claim 6, in which the socket member (101) is mounted for rotational adjustment about an axis substantially parallel to but offset from the axis of the outer surface of connecting member (108) and wherein the suspension components comprise a wheel strut (111) and a suspension arm (103) and the mounting pin (110) of the connecting member is secured to one of the wheel strut and suspension arm and the socket member is rotatably supported on the other of the wheel strut and suspension arm, whereby static adjustment of the angular position of the socket member about its axis of rotation adjusts the camber of a wheel mounted on the wheel strut.

8. A vehicle suspension system as claimed in claim 7, wherein the socket member (101) is rotatably supported on one of the wheel strut (111) and the suspension arm (103), and an actuator (113) is arranged to effect rotation of said socket member.

9. A vehicle suspension system as claimed in claim 1 or claim 6, in which the socket member (101) is mounted for rotational adjustment about an axis substantially parallel to but offset from the axis of the outer surface of the connecting member (108) and wherein the suspension components comprise a suspension arm (103) and a chassis part (82) and the mounting pin of the connecting member is secured to one of the suspension arm and the chassis part and the socket member is rotatably supported on the other of the suspension arm and the chassis part, whereby static adjustment of the angular position of the socket member about its axis of rotation adjusts the camber of a wheel mounted on the wheel strut.

10. A vehicle suspension system as claimed in claim 9, wherein the socket member (101) is rotatably supported on one of the suspension arm (103) and the chassis part (82), and an actuator (113) is arranged to effect rotation of said socket member.

11. A vehicle suspension system as claimed in claims 4 or 5 or in claim 8 or in claim 10, wherein the actuator (60,90,113) comprises one of an electric, hydraulic or pneumatic actuator and control means are provided for controlling the actuator, said control means being responsive to signals from a sensor associated with at least one of the steering mechanism and the loading of the vehicle.

12. A vehicle suspension system as claimed in any of the preceding claims, wherein there are upper and lower suspension arms (18,20,80,103), and said articulated eccentric joint connects the wheel strut (11,12,111) or chassis part (82) to one of said upper and lower suspension arms and a second articulated eccentric joint connects the wheel strut or chassis part to the other of said upper and lower suspension arms.

13. A method of setting-up a vehicle suspension system comprising the steps of providing a suspension system (10) as claimed in claim 12 and arranging the connecting member (24) connecting the upper suspension arm (18) to the wheel strut (11) or chassis (82) to be asymmetrically disposed relative to the connecting member connecting the lower suspension arm (20) to the wheel strut (11) or chassis (82).

14. A method of dynamically adjusting the camber angle of a steered wheel supported by a suspension system and comprising:
providing a suspension system (10) as claimed in claim 3; and
adjusting the steering mechanism so that the kingpin (12) and
connecting member (24) are caused to turn relative to the suspension arm (18), the eccentricity of the mounting pin (14) with respect to the connecting member (24) causing a change in the angle of the kingpin axis with respect to the vertical, whereby there is a change in the wheel camber.

15. A method of dynamically adjusting the camber angle of a wheel supported by a suspension system and comprising:
Providing a suspension system as claimed in any of claims 4, 5, 8 and 10; and
sensing movement of the steering mechanism or loading of the vehicle and sending a signal from the sensor to a control circuit, the control circuit then causing the actuator (60,90,113) to rotate one of the connecting member (24,87,108) and socket member (23,88,101) relative to the suspension components, so that a translational movement occurs between the two suspension components which adjusts the angle of the wheel strut relative to a vertical axis, so adjusting the camber of the wheel.
